# FASCICULE DE BREVET EUROPEEN

(11) **EP 2 238 670 B1**
(45) Date de publication et mention de la délivrance du brevet: **16.06.2021**
(21) Numéro de dépôt: 09706622.9
(22) Date de dépôt: 28.01.2009
(51) Int. Cl.: H02K 21/24, H02K 1/14, H02K 1/18, H02K 1/27, H02K 1/20, H02K 3/52, H02K 7/18, H02K 15/12

(54) **MACHINE ELECTRIQUE A FLUX AXIAL ET A AIMANTS PERMANENTS**
ELEKTRISCHE AXIALFLUSS- UND PERMANENTMAGNETMASCHINE
AXIAL FLUX AND PERMANENT MAGNET ELECTRIC MACHINE

(30) Priorité: 30.01.2008 FR 0850568
(43) Date de publication de la demande: 13.10.2010
(73) Titulaire: DDIS, 59121 Prouvy (FR)
(72) Inventeur: CANINI, Jean Marc, 59149 Aibes (FR); LHENRY, Bernard Claude, 71200 Le Creusot (FR)
(74) Mandataire: Cabinet Beau de Loménie
(86) Numéro de dépôt international: PCT/FR2009/050122
(87) Numéro de publication internationale: WO 2009/095612

(56) Documents cités:
- EP-A- 0 429 729
- EP-A- 1 496 596
- EP-A- 1 624 552
- EP-A- 1 684 399
- WO-A-2004/042891
- DE-A1- 10 357 746
- DE-A1- 19 703 497
- US-A- 5 619 087
- US-A- 5 710 476
- US-A1- 2004 164 641
- US-A1- 2007 001 540
- US-A1- 2007 262 674
- US-B1- 6 194 802

## Description

La présente invention concerne une machine électrique à flux axial et à aimants permanents assurant la conversion d'une énergie de type mécanique à une énergie de type électrique.

La machine électrique à flux axial pourra être utilisée pour la conversion d'énergie dans de nombreux domaines, tels que le domaine des centrales électriques en tant qu'alternateurs ou turboalternateurs, groupées à une turbine à vapeur ou une turbine à gaz, ou encore le domaine des centrales hydrauliques, dans les systèmes embarqués ou encore dans des applications de propulsions navales et autres motorisation de grandes puissances.

Toutefois, dans son application principale, la machine électrique constituera un alternateur d'une éolienne et notamment un alternateur à flux axial et à aimants permanents.

Bien que non limités à cette application, il sera détaillé dans le reste de la demande, les avantages de la machine électrique réalisée sous la forme d'un alternateur à flux axial et à aimants permanents intégrée à une éolienne.

A partir de cet exemple, l'homme du métier en déduira aisément les adaptations nécessaires pour réaliser la machine électrique dans d'autres applications telles que précitées.

La tendance depuis ces dernières années est de réaliser des éoliennes de très grand diamètre de manière à obtenir des puissances électriques très importantes sans multiplier le nombre d'éoliennes.

L'ensemble de la structure de l'éolienne a suivi cette tendance et notamment les machines électriques ou alternateurs de ces éoliennes sont de plus en plus volumineuses.

Cette modification de la taille des alternateurs et notamment des rotors et alternateurs engendre des contraintes importantes pour les fabricants qui doivent adapter leur outil de production à ces changements dimensionnels.

Par ailleurs, des éoliennes de moindres dimensions continuant à être commercialisées, les fabricants doivent conserver tous leurs outils de production de manière à pouvoir fabriquer l'ensemble de la gamme d'éléments nécessaires à la réalisation de machines électriques de dimensions variables.

Actuellement, certains fabricants de machines électriques fabriquent les rotors et les stators en une seule pièce, ce qui engendre des contraintes importantes tant au niveau de la logistique lors du déplacement de la machine électrique sur son lieu d'utilisation que des contraintes d'installation.

Par ailleurs, il apparaît que les techniques utilisées pour la réalisation du rotor et particulièrement des stators se heurtent à une limite de la taille notamment en ce qui concerne la partie induite du circuit magnétique au niveau du stator.

Il est connu les documents US-2007/001540 et US-2007/262674 qui portent sur une machine électrique à flux axial. Selon ces documents, la machine électrique comprend un rotor constitué de deux disques solidaires d'un arbre de rotation et comportant chacun une zone d'aimantation constituant la partie inductive de ladite machine. Ces deux disques sont disposés de chaque côté du stator avec un entrefer. En outre, le stator comprend un support monté à pivotement par rapport à l'arbre de rotation supportant les disques du rotor, ce support étant assujetti à une pluralité de modules actifs constituant la partie inductive de la machine. Cet assujettissement est réalisé par un encastrement des modules actifs dans la matière dudit support obtenu par moulage. Selon le document US-2007/001540, de telles caractéristiques de la machine électrique permettent de réduire le temps d'assemblage des éléments constitutifs du stator. Selon le document US-2007/262674, de telles caractéristiques de la machine électrique visent notamment à prévenir contre une baisse de rendement de la machine, due à un champ magnétique trop important. Une telle conception de machine présente pour inconvénient de nécessiter un assemblage des éléments constitutifs directement en usine, ce qui implique l'acheminement sur site en un seul bloc et par conséquent, peut constituer un inconvénient majeur pour des machines de grande taille. En outre, un disfonctionnement du stator nécessite de procéder au démontage complet de la machine pour effectuer le remplacement intégral de ce stator.

Il est connu le document WO2004/042891 A1 qui divulgue une machine électrique à flux axial et à aimants permanents qui présentent un stator comprenant un support et des modules actifs constituant la partie induite du circuit magnétique, ces modules actifs étant assujettis de manière amovible et de manière radiale à la périphérie du support se présentant sous la forme d'une jante. En outre, le rotor comprend deux disques entourant le stator, c'est-à-dire qu'ils sont disposés de chaque côté du stator, les faces internes des disques comprenant des zones d'aimantation constituant la partie inductrice du circuit magnétique. La disposition des deux disques de chaque côté du stator permet de constituer deux entrefers axiaux. Une machine électrique similaire est divulguée dans le US 6 194 802 B.

La présente invention a pour but de proposer une machine électrique avec une conception nouvelle du rotor et du stator permettant la réalisation de machines électriques présentant des tailles variables et notamment très importantes à partir d'un seul outil de production.

Un autre objet de la présente invention est de réaliser une machine électrique dans laquelle une partie du circuit magnétique peut être aisément changée sans nécessiter le remplacement de l'ensemble du circuit magnétique.

Un autre objet de la présente invention est de proposer une machine électrique dans laquelle le rotor et le stator peuvent être appareillés par secteur facilitant le déplacement et l'installation de ladite machine.

Un autre objet de la présente invention est de proposer une machine électrique dont le coût de fabrication et de maintenance est limité par rapport aux techniques utilisées jusqu'à présent.

A cet effet, la présente invention porte sur une machine électrique à flux axial et à aimants permanents telle que définie en revendication 1.

La machine électrique à flux axial et à aimants permanents, selon l'invention, comporte un rotor entourant un stator en sorte de constituer deux entrefers axiaux, le rotor comprenant des zones d'aimantation constituant la partie inductrice du circuit magnétique et le stator comprenant une partie support comportant une jante, des modules actifs constituant la partie induite du circuit magnétique et des moyens d'assujettissement agencés pour fixer radialement et de manière amovible à la périphérie de la jante les modules actifs, et le stator est composé de plusieurs secteurs, et le rotor est composé d'au moins deux secteurs assemblés entre eux, ces secteurs ayant un profil en U, les zones d'aimantation étant disposées au niveau de la face intérieure des deux branches du U, de manière à permettre l'assemblage du rotor sur le stator par déplacement radial des secteurs du rotor par rapport au stator, puis l'assemblage des secteurs du rotor entre eux.

Ainsi, cette caractéristique permet pour le moins d'utiliser des modules actifs dont les dimensions et la géométrie varient peu en fonction de la dimension de la partie de support, dont le diamètre sera adapté à la taille de la machine, et ainsi de réaliser des modules actifs adaptés à des tailles de stator très différentes avec des outils de production communs.

En outre, la mise en œuvre de moyens d'assujettissement permettant la fixation amovible des modules actifs sur le support a pour but de faciliter l'installation de la machine électrique directement sur le site où la machine doit être mise en œuvre par mise en place. Par ailleurs, le caractère amovible de chaque module actif présente pour avantage de pouvoir procéder au retrait d'un seul de ces modules actifs en cas de défectuosité de l'un d'entre eux, ce qui évite le remplacement complet du stator de la machine en cas de disfonctionnement de celui-ci.

Selon une autre caractéristique avantageuse de l'invention, les modules actifs constituant la partie induite du stator comportent :
- un bloc constitué d'une superposition de couches disposées radialement,
- deux cales inférieure et supérieure et
- deux bobinages entourant les cales inférieure et supérieure.

Cette caractéristique est particulièrement intéressante puisqu'elle permet de réaliser le bloc du module actif avec des moyens de découpe standard. En outre, cela permet d'adapter facilement les modules actifs en fonction de la taille de la machine à concevoir.

Selon une autre caractéristique de l'invention, la longueur des couches du bloc est variable et correspondant au rayon de courbure de la partie de support.

Cette disposition permet de réaliser à partir de cette structure multi-couches des parties actives adaptables à des tailles de jantes très variables.

Selon une autre caractéristique de l'invention, la largeur des cales inférieure et supérieure est dimensionnée de manière à dépasser du plan de la jante. Une telle caractéristique présente pour avantage de constituer un élément de butée venant au contact du rotor, ce qui évite tout contact entre la partie active du rotor et la partie active du stator.

Selon une autre caractéristique particulièrement avantageuse, la jante est constituée d'au moins deux secteurs, des moyens de liaison étant agencés entre les deux secteurs.

Cette caractéristique avantageuse permet, d'une part, de faciliter la fabrication de la jante et, d'autre part, de faciliter l'installation de la machine et son déplacement puisqu'il est possible de déplacer les secteurs de manière indépendante, chaque secteur du stator, composé d'un secteur de jante et d'une pluralité de modules actifs, étant couplé indépendamment des autres secteurs du stator à une partie correspondante au niveau du rotor.

Selon l'invention, la partie de support, et notamment la jante, est réalisée en tout ou partie en composite verre résine, ce qui présente pour avantage d'alléger la structure des éléments du stator et ainsi de contribuer à faciliter l'acheminement et l'installation de la machine sur site. On peut toutefois prévoir la conception de la partie de support, et notamment de la jante, en tôle mécano-soudée. En outre, le choix du matériau dépendra notamment de la rigidité recherchée pour la jante et de la conception des moyens d'assujettissement entre ladite jante et les modules actifs. En effet, le choix du matériau de la jante peut s'avérer judicieux pour la mise en œuvre desdits moyens d'assujettissement permettant le retrait des modules actifs.

Selon un premier mode de réalisation préféré, les moyens d'assujettissement des modules sur la partie support de modules comprennent des alésages réalisés sur les modules actifs ou sur les parties support de modules coopérant avec des moyens de boulonnage et des vis fixées respectivement sur la partie support ou sur les modules actifs.

Cette caractéristique permet, d'une part, une première mise en place aisée des parties actives sur la partie de support et, d'autre part, en cas de défaillance d'un des modules actifs, permet un remplacement de ce dernier sans nécessiter de remplacer entièrement la partie induite du circuit magnétique.

Selon un second mode de réalisation, le stator comprend une partie de support de modules ainsi que des moyens d'assujettissement sous la forme d'encoches radiales agencées à la périphérie de la jante et permettant l'insertion des modules actifs, le stator étant réalisé en tout ou partie en composite verre résine.

Cette caractéristique est particulièrement intéressante puisqu'elle permet là encore de pouvoir changer les modules actifs indépendamment les uns des autres.

Selon un autre mode de réalisation, les modules sont collés et les changements s'effectuent secteur par secteur.

Selon une autre caractéristique de l'invention, le rotor comprend au moins une zone d'aimantation constituant la partie inductrice du circuit magnétique, ladite au moins une zone d'aimantation comportant une superposition d'aimants permanents.

Cette caractéristique autorise également la conception de rotor de tailles très variables et notamment de grandes dimensions au moyen d'un seul outil de production et dont la partie active du circuit magnétique varie peu en fonction des dimensions du rotor.

Cette caractéristique permet également de disposer les parties actives du rotor indépendamment les unes des autres ainsi que le remplacement d'une partie active sans nécessiter le remplacement de l'ensemble desdites parties actives du circuit magnétique du rotor, ce qui facilite la maintenance de la machine sans nécessiter le remplacement complet du rotor.

Selon une autre caractéristique de l'invention, le rotor est composé d'au moins deux secteurs, ce qui facilite l'acheminement sur le site où la machine doit être installée.

A l'instar du stator qui est également avantageusement fabriqué en plusieurs secteurs, cette caractéristique permet de déplacer séparément les différents secteurs du rotor et du stator, l'appariement entre les secteurs du rotor et du stator pouvant être réalisé en effet sans assemblage de l'ensemble des secteurs du rotor ou du stator. Ainsi, on peut prévoir un pré-assemblage par secteur entre le rotor et le stator, l'assemblage final de la machine se faisant directement sur le site.

Selon une autre caractéristique, les secteurs du rotor ont un profil en U, les zones d'aimantation étant disposées au niveau de la face intérieure des branches en U, de manière à permettre l'appariement des secteurs du rotor sur le stator en déplaçant le rotor radialement par rapport au stator. Cela contribue par ailleurs à faciliter le retrait d'une partie du rotor pour accéder éventuellement à des modules actifs défectueux en vue de leur remplacement.

Cette caractéristique permet un assemblage facilité du rotor sur le stator, cet assemblage pouvant être réactivé au moyen d'un convoyeur.

D'autres caractéristiques et avantages de l'invention apparaîtront plus clairement à la lecture de la description ci-après de deux exemples préférés de réalisation dans lesquels la description n'est donnée qu'à titre d'exemple non limitatif et en référence aux dessins ci-annexés parmi lesquels :
- la figure 1 représente une vue schématique en perspective d'un premier exemple de réalisation d'une partie de l'alternateur réalisé conformément à l'invention ;
- la figure 2 représente une seconde vue en coupe de l'exemple illustré à la figure 1 ;
- la figure 3 représente un détail de réalisation de l'alternateur réalisé conformément à la présente invention ;
- la figure 4 représente un exemple schématique en perspective d'un second mode de réalisation de l'alternateur conformément à l'invention ;
- la figure 5 représente une vue en coupe de l'exemple illustré à la figure 4 ;
- la figure 6 représente un détail de réalisation du stator représenté aux figures 4 et 5 ;
- la figure 7 représente de manière schématique un exemple de réalisation du rotor conformément à la présente invention.

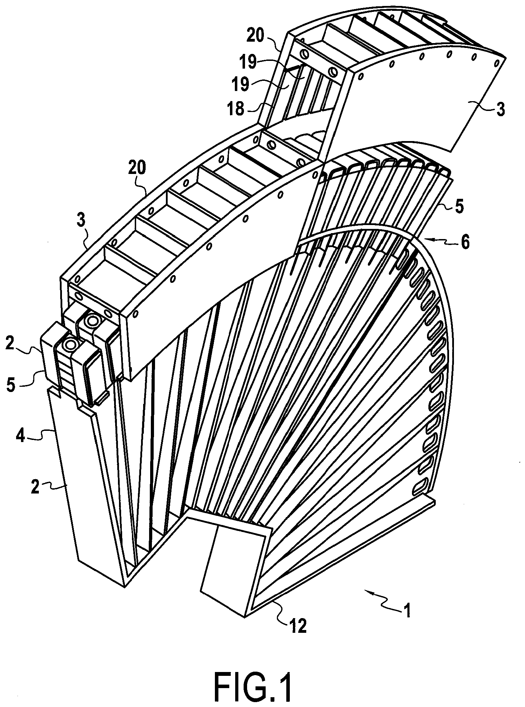

En se reportant à la figure 1, on voit représenté un composant d'une machine électrique 1 à savoir un stator 2 destiné à coopérer avec un rotor 3.

Le stator 2 comprend une première partie de support 4 et un ensemble de modules actifs 5 constituant la partie induite du circuit magnétique.

On voit également sur cette figure 1, représentés des moyens d'assujettissement 6 des modules 5 sur la partie de support du stator 4.

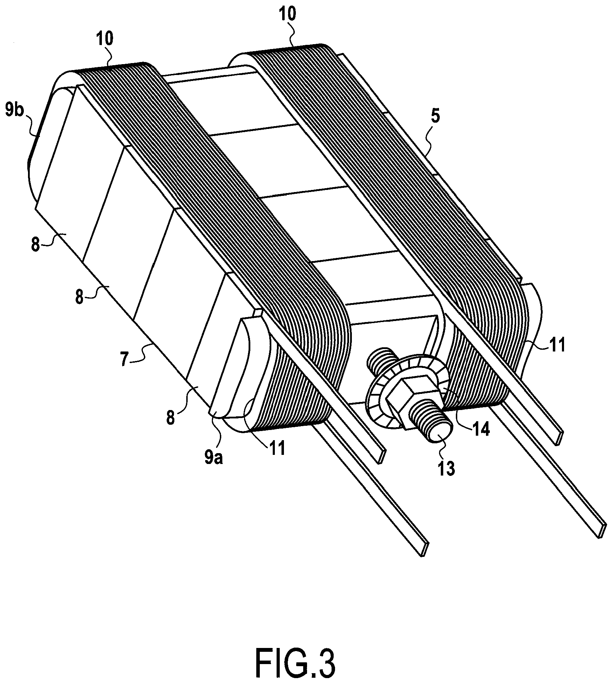

En se reportant cette fois plus particulièrement à la figure 3, on voit représenté un exemple de réalisation d'un module actif 5 destiné à être assujetti sur la partie de support 4.

Chaque module 5 comprend un bloc 7 constitué d'une superposition de couches 8, le module actif 5 comportant également deux cales inférieure et supérieure 9a,9b ainsi que deux bobinages 10 entourant les cales inférieure 9a et supérieure 9b.

De manière avantageuse, on réalise au niveau des cales 9a et 9b des encoches 11 permettant de venir réceptionner chaque bobinage 10 et d'éviter la sortie de la bobine notamment compte tenu de la force exercée par le champ magnétique sur cette dernière.

Il est également important de noter que la largeur des cales peut être dimensionnée de manière à dépasser du plan de la partie de support 4 afin de constituer éventuellement une butée empêchant tout accrochage entre le rotor et les bobines du stator 2.

La conception en couches 8 du bloc 7 permet d'avoir des couches 8 de longueurs variables permettant de s'adapter au rayon de courbure de la partie de support 4.

Par conséquent, pour la réalisation de ce bloc 7, il suffit pour le fabricant d'adapter la longueur de chaque couche 8 pour obtenir un bloc adapté aux dimensions de la partie de support 4.

On comprend ainsi aisément que le fabricant pourra réaliser des modules actifs 5 de tailles variables en utilisant un même outil de découpe en ajustant la longueur de chaque tôle magnétique représentant une couche 8 et éventuellement en ajoutant ou en retirant une ou plusieurs couches en fonction des caractéristiques techniques requises pour le circuit magnétique.

Dans les différents exemples de réalisation illustrés aux figures 1 à 7, la machine électrique 1 comprend un stator 2 avec une partie de support 4, des modules actifs 5 comportant une jante.

Cette jante est constituée avantageusement d'au moins deux secteurs de jantes 12, les secteurs de jante 12 pouvant être assemblés sur site aisément par des opérations classiques pour l'homme du métier, notamment par soudure ou rivetage.

Avantageusement, on prévoit pour la réalisation de la jante un découpage en trois secteurs de jante 12 de 120° ou quatre secteurs de 90° ; toutefois, notamment en fonction des dimensions de la jante, on pourra également envisager un plus grand nombre de secteurs 12 pour réaliser la jante.

Comme indiqué plus haut, on prévoit également des moyens d'assujettissement 6 des modules 5 sur la partie de support 4.

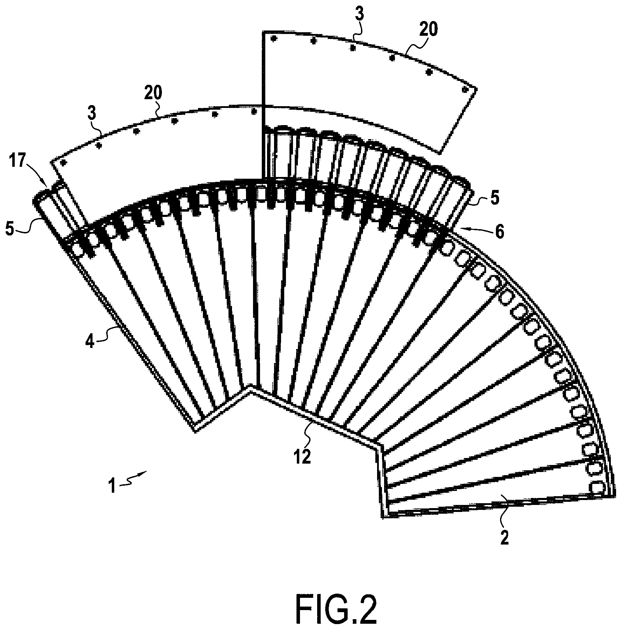

Selon un premier exemple de réalisation illustré aux figures 1 et 2, les moyens d'assujettissement 6 comprennent des alésages réalisés soit sur les modules 5, soit sur les parties de support 4 coopérant avec des moyens de boulonnage et des vis fixés sur l'autre partie.

Dans l'exemple de réalisation de la figure 1, on voit ainsi que le module 5 comporte un système de vis 13 et de boulonnage 14, la vis filetée coopérant avec un alésage réalisé sur la face supérieure de la partie dite de support 4.

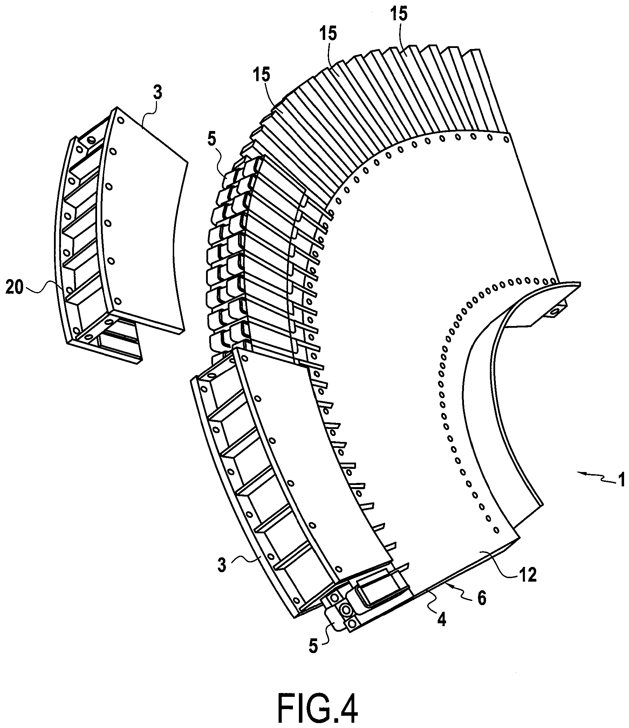

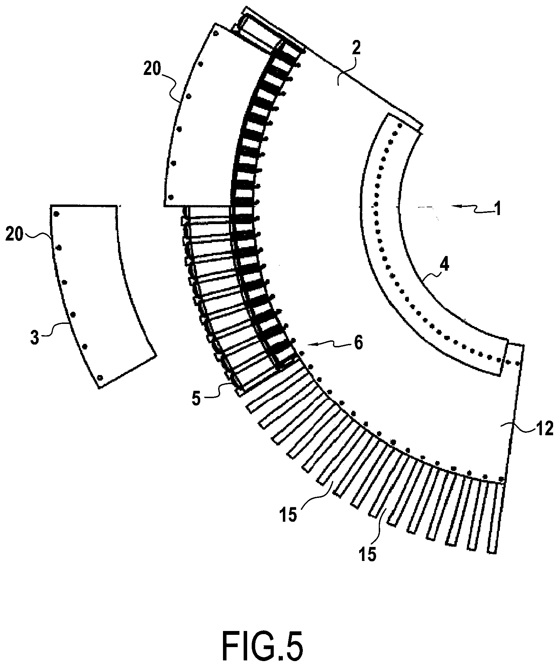

En se reportant aux figures 4 et 5, on voit représenté un deuxième mode d'assujettissement entre les modules 5 et la partie de support 4.

Dans ce mode de réalisation, le stator 2 comprend une partie de support 4 réalisée en tout ou partie en composite verre résine.

Cette partie de support 4 comprend des moyens d'assujettissement 6 réalisés sous la forme d'encoches 15 radiales permettant l'insertion des modules actifs 5.

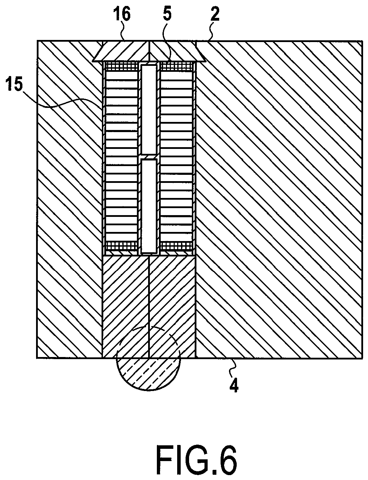

En se reportant principalement à la figure 6, on voit un module actif 5 disposé dans une encoche 15. Pour éviter tout retrait accidentel du module 5 hors de l'encoche 15, on prévoit une butée 16 avantageusement en téflon présentant un profil en queue d'aronde et permettant d'obturer l'encoche 15 réalisée dans le stator 2.

Afin d'assurer un bon fonctionnement du stator, il est courant de réaliser une étape d'imprégnation des parties actives, ce qui nécessite l'utilisation de cuves de trempage et de four de grandes dimensions.

La conception modulaire décrite ci avant permet de faciliter considérablement la phase d'imprégnation puisque chaque module peut être imprégné séparément avant montage sur la partie de support 4 et par conséquent, peut être réalisé dans des cuves et des fours de faibles dimensions indépendamment de la taille de l'alternateur, ce qui contribue à l'utilisation d'un seul et même outil de fabrication, indépendamment de la taille de la machine.

La machine électrique 1 comme indiqué précédemment, comporte un ensemble de modules actifs et il a été décrit jusqu'à présent un ensemble de modules actifs constituant la partie induite du circuit magnétique ainsi qu'une description d'un stator 2 comportant un ensemble de modules actifs 5.

Selon l'invention, la conception du rotor contribue également à utiliser un seul et même outil de production, quelle que soit la taille de cette machine. En outre, la conception du rotor contribue également à faciliter l'assemblage de la machine directement sur site, ce qui permet un acheminement en pièces détachées tout comme pour le stator. Par ailleurs, la conception du rotor contribue également à faciliter les opérations de maintenance en permettant le remplacement d'une seule partie des éléments actifs du rotor.

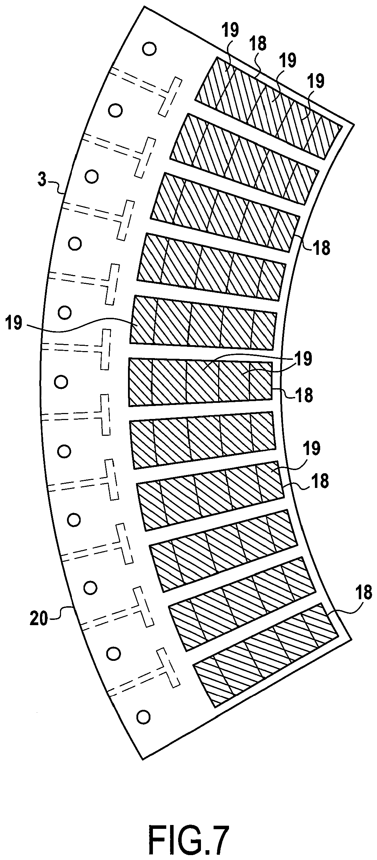

En se reportant à la figure 7, on voit représenté un rotor 3 comprenant au moins une zone d'aimantation 18 constituant la partie inductrice du circuit magnétique, cette zone comportant une superposition d'aimants permanents 19.

On voit au niveau de la figure 7 que la longueur des aimants permanents 19 d'une même zone 18 est variable.

La longueur de chaque aimant 19 est déterminée en fonction de la forme de la partie induite correspondante.

De manière avantageuse, le rotor 3 est composé d'au moins deux secteurs 20.

Avantageusement, le nombre de secteurs 20 de la partie rotor 3 correspond au nombre de secteurs 12 du stator 2 et notamment trois ou quatre secteurs.

Cette caractéristique est particulièrement intéressante puisqu'elle permet de déplacer de manière appariée le rotor 3 et le stator 2 par secteurs puis de réaliser sur place les assemblages des secteurs du rotor 3 et ceux du stator 2 entre eux.

Pour réaliser l'assujettissement entre les aimants et la surface du rotor 3, on prévoit une opération de collage ou encore de rivetage.

En se reportant aux figures 7, 1 et 4, on voit que les secteurs 20 ont un profil en U, cette disposition est particulièrement intéressante puisqu'elle permet de placer précisément la partie inductrice par rapport au stator 2.

On peut également prévoir un serrage imposant un léger écartement des branches en pinçant les branches du U sur le pont constituant l'entretoise de sorte qu'une foi le secteur positionné, les branches redeviennent parallèles entre elles sous l'effet du champ magnétique.

Bien entendu, d'autres caractéristiques à la portée de l'homme de l'art auraient également pu être envisagées sans pour autant sortir du cadre de l'invention définie par les revendications ci-après.

## Revendications

1. Machine électrique (1) à flux axial et à aimants permanents comportant un rotor (3) entourant un stator (2) en sorte de constituer deux entrefers axiaux, le rotor (3) comprenant des zones d'aimantation (18) constituant la partie inductrice du circuit magnétique et le stator (2) comprenant une partie support (4) comportant une jante (12), des modules actifs (5) constituant la partie induite du circuit magnétique et des moyens d'assujettissement (6) agencés pour fixer radialement et de manière amovible à la périphérie de la jante (12) les modules actifs (5), **caractérisée en ce que** le stator (2) est composé de plusieurs secteurs, et **en ce que** le rotor (3) est composé d'au moins deux secteurs (20) assemblés entre eux, ces secteurs (20) ayant un profil en U, les zones d'aimantation (18) étant disposées au niveau de la face intérieure des deux branches du U, de manière à permettre l'assemblage du rotor (3) sur le stator (2) par déplacement radial des secteurs du rotor (3) par rapport au stator (2), puis l'assemblage des secteurs du rotor entre eux.

2. Machine électrique (1) selon la revendication 1, les modules actifs (5) comportant un bloc (7) constitué d'une superposition de couches (8) disposées radialement, deux cales inférieure (9a) et supérieure (9b) et deux bobinages (10) entourant les cales inférieure (9a) et supérieure (9b).

3. Machine électrique (1) selon la revendication 2, les couches (8) d'un bloc (7) ayant une longueur variable et correspondant au rayon de courbure de la partie support (4).

4. Machine électrique (1) selon l'une des revendications 2 ou 3, les couches (8) d'un bloc (7) étant en tôle magnétique.

5. Machine électrique (1) selon l'une des revendications 2 à 4, les cales inférieure (9a) et supérieure (9b) ayant une largeur dimensionnée de manière à dépasser du plan de la jante (12).

6. Machine électrique (1) selon l'une des revendications 1 à 5, les modules actifs (5) étant imprégnés séparément avant de réaliser leur assujettissement sur la jante (12).

7. Machine électrique (1) selon l'une des revendications 1 à 6, la jante (12) étant constituée d'au moins deux secteurs, des moyens de liaison étant agencés entre lesdits secteurs.

8. Machine électrique (1) selon la revendication 7, la jante (12) étant constituée de trois secteurs et le rotor (3) étant composé de trois secteurs (20).

9. Machine électrique (1) selon la revendication 7, la jante (12) étant constituée de quatre secteurs et le rotor (3) étant composé de quatre secteurs (20)

10. Machine électrique (1) selon l'une des revendications 1 à 9, dans laquelle la jante (12) est réalisée en tôle mécano soudée.

11. Machine électrique (1) selon la revendication 10, les moyens d'assujettissement (6) comprenant des alésages réalisés sur les modules actifs (5) ou sur la jante (12) coopérant avec des moyens de boulonnage (14) et des vis (13) fixées respectivement sur la jante (12) ou sur les modules actifs (5).

12. Machine électrique (1) selon l'une des revendications 1 à 11, les zones d'aimantation (18) comportant une superposition d'aimants permanents (19) dans le sens radial.

13. Machine électrique (1) selon la revendication 12, les aimants permanents (19) ayant une longueur variable et correspondant à la forme de la partie induite.

## Patentansprüche

1. Elektrische Maschine (1) mit Axialfluss und mit Permanentmagneten, die einen Rotor (3) beinhaltet, der einen Stator (2) derart umgibt, dass zwei axiale Luftspalte gebildet werden, wobei der Rotor (3) Magnetisierungszonen (18) umfasst, die den induzierenden Teil des Magnetkreises bilden, und der Stator (2) einen Trägerteil (4), der eine Felge (12) beinhaltet, aktive Module (5), die den induzierten Teil des Magnetkreises bilden, und Befestigungsmittel (6) umfasst, die dazu eingerichtet sind, die aktiven Module (5) radial und auf abnehmbare Weise am Umfang der Felge (12) zu fixieren, **dadurch gekennzeichnet, dass** der Stator (2) aus mehreren Sektoren besteht, und dadurch, dass der Rotor (3) aus mindestens zwei Sektoren (20) besteht, die untereinander zusammengebaut sind, wobei diese Sektoren (20) ein U-förmiges Profil aufweisen, wobei die Magnetisierungszonen (18) im Bereich der Innenfläche der zwei Schenkel des U angeordnet sind, derart, dass das Zusammenbauen des Rotors (3) an dem Stator (2) durch radiale Verlagerung der Sektoren des Rotors (3) in Bezug auf den Stator (2) und dann das Zusammenbauen der Sektoren des Rotors untereinander ermöglicht wird.

2. Elektrische Maschine (1) nach Anspruch 1, wobei die aktiven Module (5) einen Block (7) beinhalten, der aus einer Übereinanderlagerung von radial angeordneten Schichten (8), zwei Keilen, einem unteren (9a) und einem oberen (9b), und zwei Wicklungen (10) gebildet ist, die den unteren (9a) und den oberen Keil (9b) umgeben.

3. Elektrische Maschine (1) nach Anspruch 2, wobei die Schichten (8) eines Blocks (7) eine variable Länge aufweisen und dem Krümmungsradius des Trägerteils (4) entsprechen.

4. Elektrische Maschine (1) nach einem der Ansprüche 2 oder 3, wobei die Schichten (8) eines Blocks (7) aus Magnetblech sind.

5. Elektrische Maschine (1) nach einem der Ansprüche 2 bis 4, wobei der untere (9a) und der obere Keil (9b) eine Breite aufweisen, die derart bemessen ist, dass sie über die Ebene der Felge (12) überstehen.

6. Elektrische Maschine (1) nach einem der Ansprüche 1 bis 5, wobei die aktiven Module (5) getrennt imprägniert werden, bevor ihre Befestigung an der Felge (12) ausgeführt wird.

7. Elektrische Maschine (1) nach einem der Ansprüche 1 bis 6, wobei die Felge (12) aus mindestens zwei Sektoren gebildet ist, wobei Verbindungsmittel zwischen den Sektoren eingerichtet sind.

8. Elektrische Maschine (1) nach Anspruch 7, wobei die Felge (12) aus drei Sektoren gebildet ist und der Rotor (3) aus drei Sektoren (20) besteht.

9. Elektrische Maschine (1) nach Anspruch 7, wobei die Felge (12) aus vier Sektoren gebildet ist und der Rotor (3) aus vier Sektoren (20) besteht.

10. Elektrische Maschine (1) nach einem der Ansprüche 1 bis 9, wobei die Felge (12) aus maschinengeschweißtem Blech hergestellt ist.

11. Elektrische Maschine (1) nach Anspruch 10, wobei die Befestigungsmittel (6) auf den aktiven Modulen (5) oder auf der Felge (12) hergestellte Bohrungen umfassen, die mit Verschraubungsmitteln (14) und Schrauben (13) zusammenwirken, die auf der Felge (12) beziehungsweise auf den aktiven Modulen (5) fixiert sind.

12. Elektrische Maschine (1) nach einem der Ansprüche 1 bis 11, wobei die Magnetisierungszonen (18) eine Übereinanderlagerung von Permanentmagneten (19) in der radialen Richtung beinhalten.

13. Elektrische Maschine (1) nach Anspruch 12, wobei die Permanentmagneten (19) eine variable Länge aufweisen und der Form des induzierten Teils entsprechen.

## Claims

1. An axial flux electric machine (1) having permanent magnets comprising a rotor (3) surrounding a stator (2), so as to constitute two axial air gaps, the rotor (3) having magnetization zones (18) constituting the primary portion of the magnetic circuit and the stator (2) having a support portion (4) including a rim (12), active modules (5) constituting the secondary portion of the magnetic circuit, and fastener elements (6) arranged to fasten the active modules (5) radially and removably to the periphery of the rim (12), **characterized in that** the stator (2) is made up of several sectors and **in that** the rotor (3) is made up of at least two sectors (20) that are secured together, the sectors (20) having a U-shaped profile, the magnetization zones (18) being disposed on the inside faces of the two branches of the U-shaped profile, to enable the rotor (3) to be paired on the stator (2) by moving the sectors of the rotor (3) radially relative to the stator (2), and then to enable said sectors of the rotor to be paired together.

2. An electric machine (1) according to claim 1, the active modules (5) comprising a block (7) constituted by a stack of radially placed layers (8), two spacers constituting a lower spacer (9a) and an upper spacer (9b), and two coils (10) surrounding the lower (9a) and upper (9b) spacers.

3. An electric machine (1) according to claim 2, the layers (8) of a block (7) being of varying lengths and corresponding to the radius of curvature of the support portion (4).

4. An electric machine (1) according to claim 2 or 3, the layers (8) of a block (7) being made of magnetic lamination sheet material.

5. An electric machine (1) according to any of claims 2 to 4, the lower (9a) and upper (9b) spacers being of a width that is dimensioned to project beyond the plane of the rim (12).

6. An electric machine (1) according to any of claims 1 to 5, the active modules (5) being impregnated separately prior to being fastened to the rim (12).

7. An electric machine (1) according to any of claims 1 to 6, the rim (12) being made up of at least two sectors, said sectors being connected together.

8. An electric machine (1) according to claim 7, the rim (12) being constituted by three sectors and the rotor (3) being made up of three sectors (20).

9. An electric machine (1) according to claim 7, the rim (12) being constituted by four sectors and the rotor (3) is made up of four sectors (20).

10. An electric machine (1) according to any of claims 1 to 9, wherein the rim (12) is made of machine-welded sheet metal.

11. An electric machine (1) according to claim 10, the fastener elements (6) including bores made in the active modules (5) or the rim (12) that cooperate with nuts (14) and bolts (13) fastened, respectively, to the rim (12) or the active modules (5).

12. An electric machine (1) according to any of claims 1 to 11, the magnetization zones (18) comprising stacks of permanent magnets (19) in the radial direction.

13. An electric machine (1) according to claim 12, the permanent magnets (19) being of varying lengths and matching the shape of the secondary portion.
